# EUROPEAN PATENT APPLICATION

(11) **EP 4 786 429 A1**
(43) Date of publication of application: **05.08.2026**
(21) Application number: 24871582.3
(22) Date of filing: 20.08.2024
(51) Int. Cl.: C03C 10/16, C01B 25/14, C03C 3/32, H01B 1/06, H01B 1/10, H01M 10/0562

(54) **SULFIDE SOLID ELECTROLYTE**

(30) Priority: 28.09.2023 JP 2023168391
(71) Applicant: AGC Inc., Chiyoda-ku Tokyo 100-8405 (JP)
(72) Inventor: KITAMURA, Riku, Tokyo 1008405 (JP); FUJII, Naoki, Tokyo 1008405 (JP)
(74) Representative: Müller-Boré & Partner Patentanwälte PartG mbB
(86) International application number: PCT/JP2024/029423
(87) International publication number: WO 2025/069780

(57) **Abstract**

The present invention relates to a sulfide solid electrolyte comprising a crystal phase and a glass phase, wherein the glass phase includes a phase composed of sulfide-based glass containing Li, P, and S as constituent elements; the crystal phase includes a high-ion conductive crystal phase derived from the sulfide-based glass and an additional crystal phase; the composition of the high-ion conductive crystal phase and the composition of the phase composed of the sulfide-based glass satisfy 30-50 at% of Li, 5-15 at% of P, and 30-60 at% of S; and the additional crystal phase exhibits, in an XRD pattern obtained by powder X-ray diffraction measurement, two or more diffraction peaks different from diffraction peaks indicating the high ion conductive crystal phase within the range in which 2θ = 18.0°-22.5°.

## Description

### TECHNICAL FIELD

The present invention relates to a sulfide solid electrolyte.

### BACKGROUND ART

Lithium ion secondary batteries are widely used in portable electronic devices such as a mobile phone and a notebook computer, motor vehicles, or the like.

In the related art, a liquid electrolyte has been used in a lithium ion secondary battery, but there is a concern of liquid leakage, ignition, and the like, and it is necessary to increase the size of a case for safety design. It has also been desired to improve the shortage of battery life and the narrow operating temperature range.

In contrast, attention has been paid to an all-solid-state lithium secondary battery in which a solid electrolyte is used as an electrolyte of a lithium ion secondary battery, from the viewpoint of improving safety, charging and discharging at a high speed, and reducing the size of the case.

The solid electrolytes are roughly classified into sulfide solid electrolytes and oxide solid electrolytes. Sulfide ions constituting the sulfide solid electrolytes have higher polarizability and higher ion conductivity than those of oxide ions constituting the oxide solid electrolytes. Known examples of sulfide solid electrolytes include LGPS crystals such as Li₁₀GeP₂S₁₂, argyrodite crystals such as Li₆PS₅Cl, and LPS crystallized glass such as Li₇P₃S₁₁ crystallized glass.

As a solid electrolyte that is hardly hydrolyzed and has high ion conductivity, Patent Literature 1 discloses a crystallized solid electrolyte that contains lithium, phosphorus, sulfur, and Br as constituent components and has a specific crystal structure.

### CITATION LIST

### PATENT LITERATURE

Patent Literature 1: JP2013-201110A

### SUMMARY OF INVENTION

### TECHNICAL PROBLEM

For the crystallized solid electrolyte described in Patent Literature 1, sulfide glass obtained by a mechanical milling method is crystallized by a heat treatment.

However, an effect of the crystallized solid electrolyte after the crystallization in reducing a generation amount of hydrogen sulfide is limited, and it is desired to achieve higher water resistance.

Therefore, an object of the present invention is to provide a sulfide solid electrolyte that reduces generation of hydrogen sulfide and has excellent water resistance.

### SOLUTION TO PROBLEM

As a result of intensive studies, the present inventors have conceived that, when a sulfide glass phase is obtained by melting raw materials by heating and then cooling the raw materials, the heating and cooling are performed under an ambient pressure condition, and the cooling is performed at a very high cooling rate. It has been found that when a part of the glass phase thus obtained is crystallized, a crystalline phase different from a high-ion-conductive crystalline phase having excellent ion conductivity is precipitated in addition to the high-ion-conductive crystalline phase, and very good water resistance can be achieved by a sulfide solid electrolyte containing the plurality of crystalline phases, thereby completing the present invention.

That is, the present invention relates to the following [1] to [5].
[1] A sulfide solid electrolyte containing:
   a crystalline phase and a glass phase, in which
   the glass phase includes a phase including sulfide glass which contains Li, P, and S as constituent elements,
   the crystalline phase includes a high-ion-conductive crystalline phase derived from the sulfide glass and another crystalline phase,
   compositions of the phase including the sulfide glass and the high-ion-conductive crystalline phase satisfy Li: 30 at% to 50 at%, P: 5 at% to 15 at%, and S: 30 at% to 60 at%, and
   the another crystalline phase exhibits, in an XRD pattern obtained by a powder X-ray diffraction measurement, two or more diffraction peaks different from a diffraction peak indicating the high-ion-conductive crystalline phase within a range of 2θ = 18.0° to 22.5°.
[2] The sulfide solid electrolyte according to [1], in which
   the high-ion-conductive crystalline phase has diffraction peaks at least at 2θ = 20.2° ± 0.5°, 23.8° ± 0.5°, and 29.7° ± 0.5° in the XRD pattern obtained by a powder X-ray diffraction measurement.
[3] The sulfide solid electrolyte according to [2], in which
   a peak intensity ratio represented by I_{α}/I_{A} is more than 0.01 and less than 0.6,
   where I_{A} is a peak intensity of the diffraction peak at 2θ = 20.2° ± 0.5° of the high-ion-conductive crystalline phase, and I_{α} is a peak intensity of a diffraction peak located on a lowest angle side among the two or more diffraction peaks exhibited in the range of 2θ = 18.0° to 22.5° of the another crystalline phase.
[4] The sulfide solid electrolyte according to any one of [1] to [3], in which
   the high-ion-conductive crystalline phase further has a diffraction peak at at least one selected from the group consisting of 2θ = 12.4° ± 0.5°, 14.4° ± 0.5°, and 31.4° ± 0.5° in the XRD pattern obtained by the powder X-ray diffraction measurement.
[5] The sulfide solid electrolyte according to any one of [1] to [4], in which
   the phase including the sulfide glass and the high-ion-conductive crystalline phase further contain Ha as a constituent element,
   Ha is at least one selected from the group consisting of F, Cl, Br, and I, and
   compositions of the phase including the sulfide glass and the high-ion-conductive crystalline phase further satisfy Ha: 1 at% to 12 at%.

### ADVANTAGEOUS EFFECTS OF INVENTION

According to the present invention, a sulfide solid electrolyte having excellent water resistance can be obtained. Therefore, when the sulfide solid electrolyte is used in an all-solid-state lithium secondary battery, good battery characteristics can be achieved.

### BRIEF DESCRIPTION OF DRAWINGS

[FIG. 1] FIG. 1 is a flow diagram showing a method for producing a sulfide solid electrolyte according to the present embodiment.
[FIG. 2] FIG. 2 is an XRD pattern of a sulfide solid electrolyte obtained in Example 2.
[FIG. 3] FIG. 3 is an XRD pattern of a sulfide solid electrolyte obtained in Example 5.

### DESCRIPTION OF EMBODIMENTS

Hereinafter, the present invention is described in detail, but the present invention is not limited to the following embodiment and can be freely modified and implemented without departing from the gist of the present invention. In addition, the symbol "-" or the word "to" that is used to express a numerical range includes the numerical values before and after the symbol or the word as the upper limit value and the lower limit value of the range, respectively.

### <<Sulfide Solid Electrolyte>>

A sulfide solid electrolyte according to the present embodiment contains a crystalline phase and a glass phase. The glass phase includes a phase including a sulfide glass (hereinafter, sometimes simply referred to as a "sulfide glass phase") which contains Li, P, and S as constituent elements, and the crystalline phase includes a high-ion-conductive crystalline phase derived from the sulfide glass and another crystalline phase different therefrom.

Here, the high-ion-conductive crystalline phase derived from the sulfide glass means a crystalline phase obtained by crystallizing the sulfide glass by a heat treatment, and constituent elements and composition ratios thereof can be regarded as substantially the same. Here, the constituent elements and composition ratios being substantially the same means that a difference in composition determined from a structural analysis of an XRD pattern of the high-ion-conductive crystalline phase with respect to an overall composition is within a range of ± 20% for each component.

The compositions of the sulfide glass phase and the high-ion-conductive crystalline phase satisfy Li: 30 at% to 50 at%, P: 5 at% to 15 at%, and S: 30 at% to 60 at%.

The another crystalline phase exhibits, in an XRD pattern obtained by a powder X-ray diffraction measurement, two or more diffraction peaks different from a diffraction peak indicating the high-ion-conductive crystalline phase in a range of 2θ = 18.0° to 22.5°. Here, the another crystalline phase may include only one type of crystalline phase, or may include two or more types of crystalline phases. Therefore, the two or more diffraction peaks exhibited in the range of 2θ = 18.0° to 22.5° may be peaks of one type of the another crystalline phase, or may be peaks of two or more types of the another crystalline phases.

### <Phase Including Sulfide Glass and High-ion-conductive Crystalline Phase>

The sulfide glass phase and the high-ion-conductive crystalline phase in the present embodiment contain Li, P, and S as constituent elements. In addition to these, it is preferable to contain Ha from a viewpoint of lithium ion conductivity. Here, Ha is at least one selected from the group consisting of F, Cl, Br, and I, and from a viewpoint of obtaining good oxidation resistance and water resistance, Ha more preferably contains at least one selected from the group consisting of Cl, Br, and I, still more preferably contains at least one of Cl and Br, and even more preferably contains Br. In addition, it is also even more preferable to contain both Cl and Br.

The compositions of the sulfide glass phase and the high-ion-conductive crystalline phase preferably satisfy Li: 30 at% to 50 at%, P: 5 at% to 15 at%, and S: 30 at% to 60 at%, and more preferably satisfy Li: 30 at% to 50 at%, P: 5 at% to 15 at%, S: 30 at% to 60 at%, and Ha: 1 at% to 12 at%. In the present description, at% means atom%, that is, atomic%.

In addition, as described above, the sulfide glass phase and the high-ion-conductive crystalline phase derived therefrom can be regarded as having substantially the same constituent elements and composition ratios, but do not mean that the sulfide glass phase and the high-ion-conductive crystalline phase are exactly the same, and it is preferable that the composition of each of the sulfide glass phase and the high-ion-conductive crystalline phase satisfies the above range.

In the sulfide glass phase and the high-ion-conductive crystalline phase in the present embodiment, Li is an element responsible for ion conduction as a solid electrolyte.

In the compositions of the sulfide glass phase and the high-ion-conductive crystalline phase, a Li content is preferably 30 at% to 50 at%, more preferably 35 at% to 45 at%, and still more preferably 37 at% to 43 at%. Here, from a viewpoint of increasing the lithium ion conductivity, the Li content is preferably 30 at% or more, more preferably 35 at% or more, and still more preferably 37 at% or more. Further, the Li content is preferably 50 at% or less, more preferably 45 at% or less, and still more preferably 43 at% or less, from a viewpoint of widening a vitrification range.

In the sulfide glass phase and the high-ion-conductive crystalline phase in the present embodiment, P is an element that forms a glass network, and among sulfides, a P-S bond has high resistance to both oxidation and reduction. Therefore, the solid electrolyte has a wide potential window and excellent electrochemical stability.

In the compositions of the sulfide glass phase and the high-ion-conductive crystalline phase, a P content is preferably 5 at% to 15 at%, more preferably 6 at% to 13 at%, and still more preferably 7 at% to 12 at%. Here, from the viewpoint of widening the vitrification range, the P content is preferably 5 at% or more, more preferably 6 at% or more, and still more preferably 7 at% or more. Further, from the viewpoint of increasing the lithium ion conductivity, the P content is preferably 15 at% or less, more preferably 13 at% or less, and still more preferably 12 at% or less.

In the sulfide glass phase and the high-ion-conductive crystalline phase in the present embodiment, S is an element that forms the P-S bond with P, and is an essential element for forming the glass phase.

In the compositions of the sulfide glass phase and the high-ion-conductive crystalline phase, an S content is preferably 30 at% to 60 at%, more preferably 33 at% to 50 at%, and still more preferably 35 at% to 47 at%. Here, from the viewpoint of widening the vitrification range, the S content is preferably 30 at% or more, more preferably 33 at% or more, and still more preferably 35 at% or more. In addition, from the viewpoint of increasing the lithium ion conductivity, the S content is preferably 60 at% or less, more preferably 50 at% or less, and still more preferably 47 at% or less.

When the sulfide glass phase and the high-ion-conductive crystalline phase in the present embodiment contain Ha, Ha is an element that contributes to high lithium ion conductivity.

In the compositions of the sulfide glass phase and the high-ion-conductive crystalline phase, a Ha content is preferably 1 at% to 12 at%, more preferably 3 at% to 10 at%, and still more preferably 3.5 at% to 8 at%. Here, from the viewpoint of obtaining the high lithium ion conductivity, the Ha content is preferably 1 at% or more, more preferably 3 at% or more, and still more preferably 3.5 at% or more. Furthermore, from a viewpoint of preventing precipitation of lithium halide crystals, the Ha content is preferably 12 at% or less, more preferably 10 at% or less, and still more preferably 8 at% or less. Here, the Ha content means a total content of F, Cl, Br, and I.

Ha is at least one selected from the group consisting of F, Cl, Br, and I, and preferably contains at least one of Cl and Br, and more preferably contains Br, from a viewpoint of obtaining the good oxidation resistance and water resistance, as described above. It is also more preferable to contain Cl and Br.

For example, in the Ha content, a total content of Cl and Br is preferably 50 at% or more, more preferably 70 at% or more, and may be 100 at%, that is, may consist of only Cl and Br. Further, an atomic ratio of contents represented by Cl:Br is preferably 100:0 to 0:100, more preferably 80:20 to 0:100, and still more preferably 60:40 to 0:100.

The sulfide glass phase and the high-ion-conductive crystalline phase in the present embodiment may contain elements other than Li, P, S, and Ha as constituent elements. Examples of the other elements that may be contained include Si, B, Ge, Al, O, Na, K, Mg, Ca, Sr, Ba, Y, Zr, Cr, Zn, Ga, Sn, and Sb.

When the other elements constitute oxides such as SiO₂, B₂O₃, P₂O₅, or Al₂O₃, such oxides are preferably not contained since the oxides serve as a crystal nucleus. A total content of the oxides is preferably 1 mol% or less, more preferably 0.1 mol% or less, and still more preferably 0.05 mol% or less, in terms of mol% based on oxides, and may be zero, that is, 0 mol%.

The sulfide glass phase and the high-ion-conductive crystalline phase in the present embodiment may contain, for example, Si, B, Ge, Al, Sn, or Sb among the other elements. Si, B, Ge, Al, Sn, and Sb are elements that can occupy a position of P when the sulfide glass phase is crystallized.

When the sulfide glass phase and the high-ion-conductive crystalline phase in the present embodiment contain Si as the constituent element, Si has an effect of increasing a viscosity of a molten liquid and promoting vitrification. A Si content is preferably 0 at% to 15 at%, more preferably 0.1 at% to 10 at%, and still more preferably 1 at% to 5 at%. Here, from a viewpoint of suitably obtaining an effect of Si, the Si content is preferably 0.1 at% or more, and more preferably 1 at% or more. In addition, from the viewpoint of electrochemical stability, the Si content is preferably 15 at% or less, more preferably 10 at% or less, and still more preferably 5 at% or less.

When Si has a Si-O bond or is contained as an oxide of SiO₂, as described above, the Si content is appropriately adjusted such that a total content of the oxides is 1 mol% or less, or such that a total content of oxides serving as a glass network former is 3 mol% to 20 mol%.

When the sulfide glass phase and the high-ion-conductive crystalline phase in the present embodiment contain B as the constituent element, B has an effect of increasing the viscosity of the molten liquid and promoting the vitrification. A B content is preferably 0 at% to 15 at%, more preferably 0.1 at% to 10 at%, and still more preferably 1 at% to 5 at%. Here, from a viewpoint of suitably obtaining an effect of B, the B content is preferably 0.1 at% or more, and more preferably 1 at% or more. Further, from a viewpoint of the lithium ion conductivity, the B content is preferably 15 at% or less, more preferably 10 at% or less, and still more preferably 5 at% or less.

When B has a B-O bond or is contained as an oxide of B₂O₃, as described above, the B content is appropriately adjusted such that the total content of the oxides is 1 mol% or less, or such that the total content of oxides serving as a glass network former is 3 mol% to 20 mol%.

When the sulfide glass phase and the high-ion-conductive crystalline phase in the present embodiment contain Ge as the constituent element, Ge has an effect of promoting an improvement in the lithium ion conductivity. A Ge content is preferably 0 at% to 15 at%, more preferably 0.1 at% to 10 at%, and still more preferably 1 at% to 5 at%. Here, from the viewpoint of lithium ion conductivity, the Ge content is preferably 0.1 at% or more, and more preferably 1 at% or more. Further, from a viewpoint of ease of glass formation, the Ge content is preferably 15 at% or less, more preferably 10 at% or less, and still more preferably 5 at% or less.

However, when Ge has a Ge-O bond or is contained as an oxide of GeO₂, as described above, the Ge content is appropriately adjusted such that the total content of the oxides is 1 mol% or less.

When the sulfide glass phase and the high-ion-conductive crystalline phase in the present embodiment contain Al as the constituent element, Al has an effect of increasing the viscosity of the molten liquid and promoting the vitrification. An Al content is preferably 0 at% to 15 at%, more preferably 0.1 at% to 10 at%, and still more preferably 1 at% to 5 at%. Here, from a viewpoint of suitably obtaining an effect of Al, the Al content is preferably 0.1 at% or more, and more preferably 1 at% or more. Further, from the viewpoint of the lithium ion conductivity, the Al content is preferably 15 at% or less, more preferably 10 at% or less, and still more preferably 5 at% or less.

When Al has an Al-O bond or is contained as an oxide of Al₂O₃, as described above, the Al content is appropriately adjusted such that the total content of the oxides is 1 mol% or less, or such that the total content of oxides serving as a glass network former is 3 mol% to 20 mol%.

When the sulfide glass phase and the high-ion-conductive crystalline phase in the present embodiment contain Sn as the constituent element, Sn has an effect of increasing the viscosity of the molten liquid and promoting the vitrification. A Sn content is preferably 0 at% to 15 at%, more preferably 0.1 at% to 10 at%, and still more preferably 1 at% to 5 at%. Here, from a viewpoint of suitably obtaining an effect of Sn, the Sn content is preferably 0.1 at% or more, and more preferably 1 at% or more. In addition, from the viewpoint of achieving the high lithium ion conductivity, the Sn content is preferably 15 at% or less, more preferably 10 at% or less, and still more preferably 5 at% or less.

However, when Sn has a Sn-O bond or is contained as an oxide of SnO₂, as described above, the Sn content is appropriately adjusted such that the total content of the oxides is 1 mol% or less.

When the sulfide glass phase and the high-ion-conductive crystalline phase in the present embodiment contain Sb as the constituent element, Sb has an effect of increasing the viscosity of the molten liquid and promoting the vitrification. An Sb content is preferably 0 at% to 15 at%, more preferably 0.1 at% to 10 at%, and still more preferably 1 at% to 5 at%. Here, from a viewpoint of suitably obtaining an effect of Sb, the Sb content is preferably 0.1 at% or more, and more preferably 1 at% or more. Further, from a viewpoint of the lithium ion conductivity, the Sb content is preferably 15 at% or less, more preferably 10 at% or less, and still more preferably 5 at% or less.

When Sb has a Sb-O bond or is contained as an oxide of Sb₂O₃, as described above, the Sb content is appropriately adjusted such that the total content of the oxides is 1 mol% or less, or such that the total content of oxides serving as a glass network former is 3 mol% to 20 mol%.

In the compositions of the sulfide glass phase and the high-ion-conductive crystalline phase in the present embodiment, a composition ratio represented by Li/P is preferably 2.5 or more, more preferably 2.5 to 7.0, still more preferably 3.0 to 6.5, and even more preferably 3.2 to 6.2.

Here, from the viewpoint of obtaining high lithium ion conductivity, the composition ratio is preferably 2.5 or more, more preferably 3.0 or more, and still more preferably 3.2 or more. The above composition ratio is preferably 7.0 or less, more preferably 6.5 or less, and still more preferably 6.2 or less, from the viewpoint of widening the vitrification range.

In the present description, the composition ratio means a content ratio (at%) of each element in the sulfide glass phase and the high-ion-conductive crystalline phase.

In the compositions of the sulfide glass phase and the high-ion-conductive crystalline phase in the present embodiment, a composition ratio represented by S/P is preferably 3.0 to 5.0, more preferably 3.5 to 4.5, and still more preferably 3.8 to 4.2. Here, from the viewpoint of the lithium ion conductivity, the composition ratio is preferably 3.0 or more, more preferably 3.5 or more, and still more preferably 3.8 or more. From the viewpoint of water resistance, the composition ratio is preferably 5.0 or less, more preferably 4.5 or less, and still more preferably 4.2 or less.

When the sulfide glass phase and the high-ion-conductive crystalline phase further contain Ha, a composition ratio represented by [(F + Cl + Br)/Ha] is preferably 0.5 or more, more preferably 0.5 to 1.0, still more preferably 0.6 to 1.0, and particularly preferably 0.8 to 1.0. Here, from the viewpoint of oxidation resistance, the composition ratio is preferably 0.5 or more, more preferably 0.6 or more, and still more preferably 0.8 or more. An upper limit of the composition ratio is not particularly limited and may be 1.0. The composition ratio of 1.0 means that I is not contained as Ha. When the sulfide glass phase and the high-ion-conductive crystalline phase contain I as Ha, the composition ratio may be 0.8 or less or 0.6 or less from a viewpoint of obtaining an effect of I.

When the compositions of the sulfide glass phase and the high-ion-conductive crystalline phase further contain Ha, a composition ratio represented by Ha/P is preferably 0.01 to 1.5, more preferably 0.1 to 1.2, and still more preferably 0.2 to 1.0. Here, from the viewpoint of water resistance, the composition ratio is preferably 0.01 or more, more preferably 0.1 or more, and still more preferably 0.2 or more. From the viewpoint of preventing precipitation of lithium halide crystals, the composition ratio is preferably 1.5 or less, more preferably 1.2 or less, and still more preferably 1.0 or less. Here, Ha means the total of F, Cl, Br, and I.

The constituent elements of the sulfide glass phase and the high-ion-conductive crystalline phase and the contents thereof are obtained by comparing results of measuring constituent elements of the entire sulfide solid electrolyte and contents (composition ratio) thereof with element ratios constituting a crystal structure obtained from the XRD pattern.

Methods for determining the constituent elements of the entire sulfide solid electrolyte and the contents thereof differ depending on the elements. For example, P and S are determined by ICP emission spectroscopy, Li is determined by atomic absorption spectroscopy, and Ha is determined by ion chromatography. Details of each analysis will be described later in the section of Examples.

The sulfide glass phase in the present embodiment is partially crystallized by a heat treatment to become the high-ion-conductive crystalline phase in the present embodiment. The high-ion-conductive crystalline phase may have a Thio-Lisicon type or LGPS type crystal structure. A Thio-Lisicon type or LGPS type high-ion-conductive crystalline phase has high lithium ion conductivity and is useful as the solid electrolyte.

The high-ion-conductive crystalline phase in the present embodiment preferably has diffraction peaks at least at 2θ = 20.2° ± 0.5°, 23.8° ± 0.5°, and 29.7° ± 0.5° in an XRD pattern obtained by a powder X-ray diffraction (XRD) measurement.

The XRD measurement is performed using a CuKα radiation (λ = 1.5418 Å) as a radiation source, and details of measurement conditions are as described in the section of Examples below.

The high-ion-conductive crystalline phase in the present embodiment preferably has a diffraction peak at at least one selected from the group consisting of 2θ = 12.4° ± 0.5°, 14.4° ± 0.5°, and 31.4° ± 0.5° in addition to 2θ = 20.2° ± 0.5°, 23.8° ± 0.5°, and 29.7° ± 0.5° in the XRD pattern obtained by the powder X-ray diffraction measurement, more preferably has diffraction peaks at at least two positions, and still more preferably has diffraction peaks at all the three positions.

In the case of having the diffraction peaks as described above, the high-ion-conductive crystalline phase may be determined to have the Thio-Lisicon type or LGPS type crystal structure. These have high lithium ion conductivity.

A total proportion of the sulfide glass phase and the high-ion-conductive crystalline phase in the sulfide solid electrolyte according to the present embodiment is preferably 50 mass% to 100 mass%, more preferably 70 mass% to 95 mass%, and still more preferably 80 mass% to 90 mass%. Here, the total proportion is preferably 50 mass% or more, more preferably 70 mass% or more, and still more preferably 80 mass% or more, from the viewpoint of the lithium ion conductivity. Further, the total proportion may be 100 mass%, that is, the composite may include only the sulfide glass phase and the high-ion-conductive crystalline phase. On the other hand, when the sulfide glass phase is obtained, the crystalline phase may be obtained together, and it takes a time and a cost to obtain only the sulfide glass phase and the high-ion-conductive crystalline phase. Therefore, from the viewpoint of productivity of the sulfide solid electrolyte, the above total proportion is more preferably 95 mass% or less, and still more preferably 90 mass% or less.

Respective proportions of the sulfide glass phase and the high-ion-conductive crystalline phase can be determined by powdering the sulfide solid electrolyte, performing the powder X-ray diffraction (XRD) measurement together with a crystal powder serving as an internal standard, and then performing Rietveld analysis. The proportion of the sulfide glass phase can be determined by determining a proportion of crystals by the above analysis and subtracting the proportion from 100 mass%.

A content ratio of the high-ion-conductive crystalline phase in the sulfide solid electrolyte according to the present embodiment is preferably 30 mass% or more, and more preferably 50 mass% or more, or more preferably 30 mass% to 90 mass%, still more preferably 50 mass% to 85 mass%, and even more preferably 60 mass% to 80 mass%. Here, the content ratio is preferably 30 mass% or more, more preferably 50 mass% or more, and still more preferably 60 mass% or more, from the viewpoint of the lithium ion conductivity. Furthermore, from the viewpoint of suitably obtaining an effect of the phase including the sulfide glass, the content ratio is preferably 90 mass% or less, more preferably 85 mass% or less, and still more preferably 80 mass% or less.

The content ratio of the sulfide glass phase in the sulfide solid electrolyte according to the present embodiment is preferably 1 mass% to 70 mass%, more preferably 5 mass% to 50 mass%, and still more preferably 8 mass% to 40 mass%. Here, the content ratio is preferably 1 mass% or more, more preferably 5 mass% or more, and still more preferably 8 mass% or more from the viewpoint of achieving softness caused by the glass phase that facilitates formation of an interface between an active material and the solid electrolyte. In addition, from the viewpoint of suitably obtaining an effect of the high-ion-conductive crystalline phase, the content ratio is preferably 70 mass% or less, more preferably 50 mass% or less, and still more preferably 40 mass% or less.

### <Another crystalline phase>

The sulfide solid electrolyte according to the present embodiment includes another crystalline phase in addition to the sulfide glass phase and the high-ion-conductive crystalline phase.

In the XRD pattern obtained by the powder X-ray diffraction measurement, the another crystalline phase exhibits two or more diffraction peaks different from the diffraction peaks indicating the high-ion-conductive crystalline phase at least at a range of 2θ = 18.0° to 22.5°. Here, as described above, the another crystalline phase may include only one type of crystalline phase, or may include two or more types of crystalline phases.

A crystal structure of the crystalline phase exhibiting two or more diffraction peaks in the range of 2θ = 18.0° to 22.5° is not analyzed. However, it is confirmed that the diffraction peak is not lithium phosphate because a peak of a P-O bond is not observed in a Raman spectrum or a ³¹P-NMR spectrum. Although specific production conditions will be described in Examples to be described later, it is unlikely that lithium phosphate is precipitated by heating at 210°C for crystallization. Therefore, the crystalline phase exhibiting two or more diffraction peaks in the range of 2θ = 18.0° to 22.5° is considered to be a novel crystalline phase.

Since the sulfide solid electrolyte according to the present embodiment includes the another crystalline phase in addition to the high-ion-conductive crystalline phase, the water resistance thereof is greatly improved.

A reason for this is not clear, but it is presumed that the another crystalline phase is precipitated in the vicinity of surfaces of particles formed of the high-ion-conductive crystalline phase during the heat treatment. Further, it is considered that as a result of the another crystalline phase serving as resistance to a reaction between the high-ion-conductive crystalline phase and water, an amount of hydrogen sulfide generated due to the high-ion-conductive crystalline phase decreases, and the water resistance of the sulfide solid electrolyte is improved.

The another crystalline phase may exhibit two or more diffraction peaks in the range of 2θ = 18.0° to 22.5°, but the number of the diffraction peaks is preferably 2 to 5, more preferably 2 to 4, and still more preferably 2 or 3.

The diffraction peaks in the range of 2θ = 18.0° to 22.5° are preferably shown, for example, at one or more positions of 2θ = 18.2° ± 0.5°, 19.2° ± 0.5°, 21.4° ± 0.5°, and 21.8° ± 0.5°, and more preferably at two or more positions thereof, may be shown at three or more positions, and may be shown at all the four positions.

Further, the diffraction peaks are more preferably shown at one or more positions of 2θ = 18.2° ± 0.5°, 19.2° ± 0.5°, and 21.8° ± 0., still more preferably shown at two or more positions thereof, and may be shown at all the three positions.

When a peak intensity of the diffraction peak at 2θ = 20.2° ± 0.5° of the high-ion-conductive crystalline phase is defined as I_{A} and a peak intensity of the diffraction peak located on a lowest angle side among two or more diffraction peaks shown in the range of 2θ = 18.0° to 22.5° of the another crystalline phase is defined as I_{α}, a peak intensity ratio represented by I_{α}/I_{A} is preferably more than 0.01 and less than 0.6, more preferably 0.05 to 0.5, and still more preferably 0.1 to 0.4. Here, the peak intensity ratio is preferably more than 0.01, more preferably 0.05 or more, and still more preferably 0.1 or more from the viewpoint of suitably improving the water resistance of the sulfide solid electrolyte. From the viewpoint of the lithium ion conductivity, the peak intensity ratio is preferably less than 0.6, more preferably 0.5 or less, and still more preferably 0.4 or less.

A proportion of the another crystalline phase in the sulfide solid electrolyte is preferably 1 mass% to 40 mass%, more preferably 3 mass% to 30 mass%, and still more preferably 5 mass% to 20 mass%. Here, from the viewpoint of sufficiently exhibiting characteristics of the sulfide glass phase and the high-ion-conductive crystalline phase, the proportion of the another crystalline phase is preferably 40 mass% or less, more preferably 30 mass% or less, and still more preferably 20 mass% or less. From the viewpoint of the water resistance, the another crystalline phase is preferably 1 mass% or more, more preferably 3 mass% or more, and still more preferably 5 mass% or more.

### <Other Heterogeneous Phases>

The sulfide solid electrolyte according to the present embodiment may also include other heterogeneous phases other than the sulfide glass phase, the high-ion-conductive crystalline phase, and the another crystalline phase. Examples of the other heterogeneous phases include crystalline phases other than the another crystalline phase, which are obtained together when the sulfide glass phase is produced.

A proportion of such heterogeneous phases in the sulfide solid electrolyte is 40 mass% or less, preferably 1 mass% to 40 mass%, more preferably 2 mass% to 35 mass%, and still more preferably 5 mass% to 30 mass%. Here, from a viewpoint of sufficiently exhibiting characteristics of the sulfide glass phase, the high-ion-conductive crystalline phase, and the another crystalline phase, a total proportion of the other heterogeneous phases is 40 mass% or less, preferably 35 mass% or less, and more preferably 30 mass% or less. In addition, the other heterogeneous phases may not be contained, but from the viewpoint of the productivity of the sulfide solid electrolyte, the total proportion of the other heterogeneous phases is preferably 1 mass% or more, more preferably 2 mass% or more, and still more preferably 5 mass% or more.

### <Physical Property of Sulfide Solid Electrolyte>

When the sulfide solid electrolyte according to the present embodiment is formed into a green compact under 380 MPa, the lithium ion conductivity at 25°C is preferably 2.0 mS/cm or more. This is due to the high lithium ion conductivity of the sulfide glass phase and the high-ion-conductive crystalline phase derived therefrom. However, since it is difficult to extract only the sulfide glass phase or the high-ion-conductive crystalline phase from the sulfide solid electrolyte, the lithium ion conductivity of the sulfide glass phase and the high-ion-conductive crystalline phase is evaluated based on the lithium ion conductivity of the sulfide solid electrolyte.

The lithium ion conductivity of the sulfide solid electrolyte according to the present embodiment is preferably 2.0 mS/cm or more, and higher lithium ion conductivity is more preferable, but a value thereof changes depending on the composition or the proportion of the sulfide glass phase, the high-ion-conductive crystalline phase, or the like.

For example, the lithium ion conductivity is preferably 2.5 mS/cm or more when the composition contains 90 at% or more of Br in Ha, and the lithium ion conductivity is preferably 2.0 mS/cm or more when the composition contains 90 at% or more of Cl in Ha.

The lithium ion conductivity in the present description is obtained by an electrochemical impedance spectroscopy using, as a measurement sample, the green compact obtained by compacting a powder of the sulfide solid electrolyte at 380 MPa. Specifically, an electrochemical impedance spectroscopy of the measurement sample is performed at a measurement frequency of 100 Hz to 1 MHz, a measurement voltage of 100 mV, and a measurement temperature of 25°C, and a value obtained from the obtained Nyquist plot is regarded as the lithium ion conductivity.

An amount of H₂S generated when the sulfide solid electrolyte according to the present embodiment is held in an atmosphere at a dew point of -20°C for 5 hours is preferably 10 mL/g or less, more preferably 1 mL/g or less, still more preferably 0.1 mL/g or less, and the smaller the better.

More specific measurement conditions of the generation amount of H₂S are as follows.

First, the sulfide solid electrolyte is passed through a 100 µm mesh to obtain a powder having an average particle diameter of 10 µm to 20 µm. Further, the generation amount of hydrogen sulfide (H₂S) measured when 10 mg of such a powder is exposed to nitrogen (N₂) gas humidified to a dew point of -20°C at a flow rate of 0.5 L/min for 5 hours is monitored, and a total amount is defined as the generation amount of H₂S.

The generation amount of H₂S is a value serving as an index of hydrolysis resistance, that is, the water resistance of the sulfide solid electrolyte, and can be achieved by the presence of the sulfide glass phase or the high-ion-conductive crystalline phase or by containing Ha as the constituent element. In particular, it is preferable to contain at least one of Cl and Br as Ha, and it is more preferable to contain Br. It is also more preferable to contain both Cl and Br.

Heat resistance of the sulfide solid electrolyte according to the present embodiment can be evaluated by the lithium ion conductivity after performing a heat treatment on the sulfide solid electrolyte in a nitrogen atmosphere at 240°C for 1 hour.

Specifically, the lithium ion conductivity after the heat treatment is preferably 0.8 mS/cm or more, and higher lithium ion conductivity is more preferable, but the value thereof changes depending on the composition or the proportion of the sulfide glass phase, the high-ion-conductive crystalline phase, or the like.

When a difference in lithium ion conductivity before and after the heat treatment is 2 mS/cm or less, it can be said that the heat resistance of the sulfide solid electrolyte is good, and the difference is more preferably 1.8 mS/cm or less and still more preferably 1.5 mS/cm or less, and the smaller the difference, the more preferable.

An average particle diameter (D50) of the sulfide solid electrolyte according to the present embodiment is preferably 0.1 µm to 300 µm, more preferably 0.3 µm to 50 µm, and still more preferably 0.5 µm to 5 µm. Here, from a viewpoint of reducing a load in a fine pulverization step when the sulfide solid electrolyte is used in a secondary battery, the average particle diameter is preferably 300 µm or less, more preferably 50 µm or less, and still more preferably 5 µm or less. On the other hand, from a viewpoint of ease of handling the powder, the average particle diameter is preferably 0.1 µm or more, more preferably 0.3 µm or more, and still more preferably 0.5 µm or more.

The average particle diameter (D50) can be adjusted by coarsely pulverizing the obtained sulfide solid electrolyte. The coarse pulverization can be adopted by a known method in the related art, such as a cutter mill, a planetary ball mill, or a jet mill, and dry pulverization is preferred. Thereafter, by a wet or dry pulverization method such as a bead mill or a jet mill, particles having a finer particle diameter are used as a solid electrolyte of a positive electrode, a negative electrode, or a separator layer as a battery material.

The sulfide solid electrolyte according to the present embodiment is suitable as an electrolyte of a lithium ion secondary battery. When the sulfide solid electrolyte is used for a lithium ion secondary battery, the sulfide solid electrolyte forms a solid electrolyte layer together with other components such as a binder as necessary. As the binder or other components, known substances according to the related art can be used.

A content of the sulfide solid electrolyte according to the present embodiment relative to the entire solid electrolyte layer is preferably 80 mass% or more, and more preferably 90 mass% or more.

The sulfide solid electrolyte according to the present embodiment may be used as a positive electrode layer or a negative electrode layer by being mixed with a positive electrode active material or a negative electrode active material. As the positive electrode active material or negative electrode active material used for the positive electrode layer or negative electrode layer, a current collector, a binder, a conductive aid, and the like, known materials according to the related art can be used.

The lithium ion secondary battery includes the positive electrode layer, the solid electrolyte layer, and the positive electrode layer, and the sulfide solid electrolyte according to the present embodiment is preferably contained in at least one layer selected from the group consisting of the positive electrode layer, the solid electrolyte layer, and the positive electrode layer.

As a material of an outer casing of the lithium ion secondary battery, known materials according to the related art may also be used. As a shape of the lithium ion secondary battery, known shapes according to the related art may be used, and examples of the shape of the lithium ion secondary battery include a coin shape, a sheet shape (film shape), a folded shape, a wound cylindrical shape with a bottom, and a button shape. The shape thereof can be appropriately selected according to the application.

### <<Method for Producing Sulfide Solid Electrolyte>>

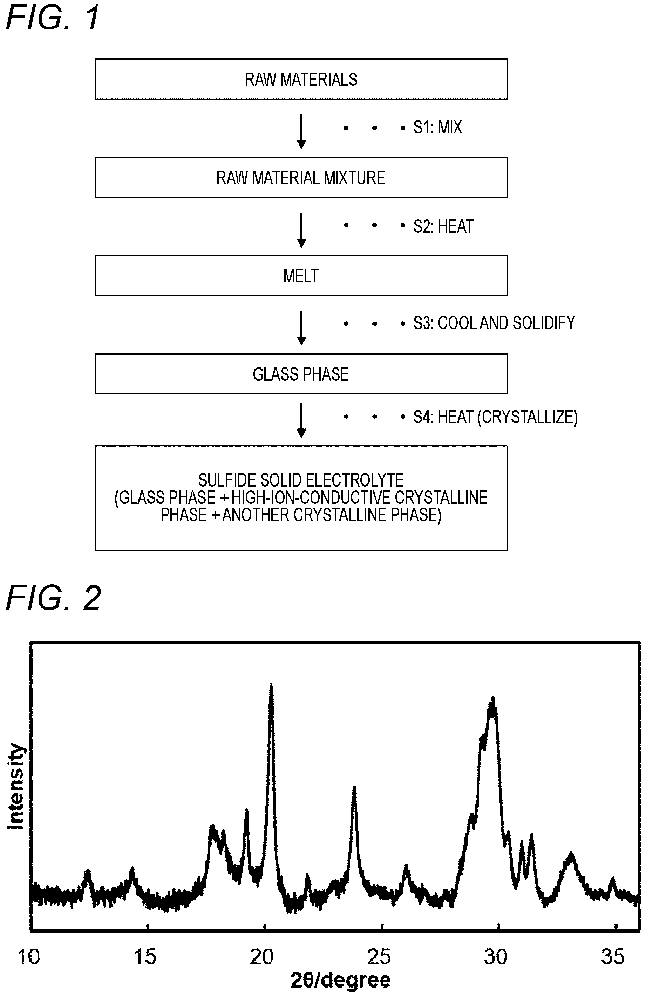

A method for producing a sulfide solid electrolyte according to the present embodiment includes the following step 1 to step 4 in order as step S1 to step S4 as shown in FIG. 1.
Step S1: step 1 of mixing raw materials to obtain a raw material mixture containing Li, P, and S
Step S2: step 2 of heating the raw material mixture obtained in step 1 to obtain a melt
Step S3: step 3 of cooling and solidifying the melt obtained in step 2 to obtain a glass phase
Step S4: step 4 of heating the glass phase obtained in step 3 to obtain a high-ion-conductive crystalline phase obtained by crystallizing a part of the glass phase and another crystalline phase

The heating in step 2 and the cooling and solidifying in step 3 are performed under an ambient pressure condition, and a cooling rate in the cooling and solidifying is 100°C/sec or more. Accordingly, the sulfide solid electrolyte including the glass phase, the high-ion-conductive crystalline phase derived therefrom, and another crystalline phase is obtained. In the present description, "under an ambient pressure condition" means a pressure range of about (gauge pressure ± 15 kPa).

In step 1, the raw materials are mixed such that compositions of the sulfide glass phase and the high-ion-conductive crystalline phase to be obtained satisfy Li: 30 at% to 50 at%, P: 5 at% to 15 at%, and S: 30 at% to 60 at%, whereby the sulfide solid electrolyte described in the <<Sulfide Solid Electrolyte>> is obtained.

Hereinafter, the steps will be described below.

### <Step 1>

Step S1 in the present embodiment is step 1 of mixing the raw materials to obtain the raw material mixture containing Li, P, and S.

Specifically, the raw material mixture is obtained by mixing a raw material containing a Li element, a raw material containing a P element, and a raw material containing a S element. When it is desired to obtain a glass phase further containing Ha as the constituent element, in addition to the raw material containing the Li element, the raw material containing the P element, and the raw material containing the S element, a raw material containing an Ha element is further mixed to obtain a raw material mixture containing Li, P, S, and Ha. Here, the Ha element is at least one element selected from the group consisting of F, Cl, Br, and I.

Examples of the raw material containing the Li element include lithium compounds such as lithium sulfide (Li₂S), lithium carbonate (Li₂CO₃), lithium sulfate (Li₂SO₄), lithium oxide (Li₂O), and lithium hydroxide (LiOH), and metallic lithium. The substances containing the Li element may be used alone or in combination of two or more kinds thereof.

As the raw material containing the Li element, lithium sulfide is preferably used from the viewpoint of obtaining the sulfide glass phase. In the case in which the sulfide solid electrolyte to be obtained contains a halogen element, a lithium halide (LiHa, Ha is a halogen element) is also preferred as the raw material containing the Li element. The lithium halide is to be described later.

Examples of the raw material containing the P element include phosphorus sulfides such as phosphorus pentasulfide (P₂S₅) and phosphorus trisulfide (P₂S₃), phosphorus compounds such as sodium phosphate (Na₃PO₄), and elemental phosphorus. The substances containing the P element may be used alone or in combination of two or more kinds thereof.

The raw material containing the P element is preferably phosphorus sulfides, and more preferably phosphorus pentasulfide (P₂S₅), from the viewpoint of preventing inclusion of elements other than the elements constituting the target sulfide solid electrolyte.

Examples of the raw material containing the S element include lithium sulfide (Li₂S), phosphorus sulfides such as phosphorus trisulfide (P₂S₃), and phosphorus pentasulfide (P₂S₅), other sulfur compounds containing phosphorus, and a sulfur-containing compound. Examples of the sulfur-containing compound include H₂S, CS₂, iron sulfides (such as FeS, Fe₂S₃, FeS₂, and Fe₁₋ₓS), bismuth sulfide (Bi₂S₃), and copper sulfides (such as CuS, Cu₂S, and Cu₁₋ₓS). The substances containing the S element may be used alone or in combination of two or more kinds thereof.

The raw material containing the S element is preferably lithium sulfide or phosphorus sulfide, and more preferably phosphorus pentasulfide (P₂S₅) as the phosphorus sulfide, from the viewpoint of preventing the inclusion of elements other than the elements constituting the target sulfide solid electrolyte. Lithium sulfide is a compound serving as both the raw material containing the Li element and the raw material containing the S element, and the phosphorus sulfide is a compound serving as both the raw material containing the S element and the raw material containing the P element.

Examples of the raw material containing the Ha element include lithium halides such as lithium fluoride (LiF), lithium chloride (LiCl), lithium bromide (LiBr), and lithium iodide (LiI), phosphorus halides, phosphoryl halides, sulfur halides, sodium halides, and boron halides. The substances containing the Ha element may be used alone or in combination of two or more kinds thereof.

From the viewpoint of reactivity, the raw material containing the Ha element is preferably the lithium halides, more preferably LiCl, LiBr, or LiI, and still more preferably LiCl or LiBr.

A raw material mixture may be obtained by mixing raw materials further containing other elements in accordance with a composition of a desired sulfide solid electrolyte.

As described above, examples of the other elements include Si, B, Ge, Al, O, Na, K, Mg, Ca, Sr, Ba, Y, Zr, Cr, Zn, Ga, Sn, and Sb. Among the other elements, for example, Si, B, Ge, Al, Sn, and Sb may be contained. Si, B, Ge, Al, Sn, and Sb are elements that can occupy the position of P when the sulfide glass phase is crystallized.

As the raw material containing the other elements, a known material in the related art can be used.

Examples of a raw material containing the Si element include SiO₂ and SiS₂. Among them, SiO₂ is more preferred from the viewpoint of the lithium ion conductivity. These compounds may be used alone or in combination of two or more kinds thereof.

Examples of a raw material containing the B element include B₂O₃ and B₂S₃. Among them, B₂O₃ is more preferred from the viewpoint of the water resistance of glass. These compounds may be used alone or in combination of two or more kinds thereof.

Examples of a raw material containing the Ge element include GeO₂, GeS, GeS₂, and GeCl₂. Among them, from the viewpoint of the lithium ion conductivity, GeS₂ and GeCl₂ are preferred, and GeS₂ is more preferred. These compounds may be used alone or in combination of two or more kinds thereof.

Examples of a raw material containing the Al element include Al₂S₃, Al₂O₃, and AlCl₃. Among them, Al₂S₃ and AlCl₃ are preferred, and Al₂S₃ is more preferred, from the viewpoint of the lithium ion conductivity and the water resistance. These compounds may be used alone or in combination of two or more kinds thereof.

Examples of a raw material containing the Sn element include SnS, SnS₂, SnO, SnO₂, and SnCl₂. Among them, from the viewpoint of the lithium ion conductivity, SnS₂ and SnCl₂ are preferred, and SnS₂ is more preferred. These compounds may be used alone or in combination of two or more kinds thereof.

Examples of a raw material containing the Sb element include Sb₂S₃, Sb₂O₃, Sb₂O₅, SbCl₃, and SbCl₅. Among them, from the viewpoint of the lithium ion conductivity and the water resistance, Sb₂S₃ and SbCl₃ are preferred, and Sb₂S₃ is more preferred. These compounds may be used alone or in combination of two or more kinds thereof.

These raw materials are appropriately blended according to compositions of a desired sulfide glass phase and a high-ion-conductive crystalline phase derived therefrom. Specifically, in order to obtain the sulfide solid electrolyte described in the above <<Sulfide Solid Electrolyte>>, the raw materials are mixed such that the compositions of the glass phase to be obtained and the high-ion-conductive crystalline phase derived therefrom satisfy Li: 30 at% to 50 at%, P: 5 at% to 15 at%, and S: 30 at% to 60 at%. Further, it is preferable that the glass phase and the high-ion-conductive crystalline phase further contain Ha as the constituent element, and further satisfy Ha: 1 at% to 12 at% in addition to the above compositions.

A crystal structure of the high-ion-conductive crystalline phase to be obtained is also determined by blending these raw materials.

In addition to the above, preferred aspects of the glass phase to be obtained and the high-ion-conductive crystalline phase derived therefrom are the same as preferred aspects of the <Phase Including Sulfide Glass and High-ion-conductive Crystalline Phase> of the above <<Sulfide Solid Electrolyte>>.

It is preferable to reduce a particle size of each raw material from the viewpoint of shortening a holding time in the heating and melting in the subsequent step 2. When the particle size of the raw material is too large, homogeneity of the glass phase or the sulfide solid electrolyte may be affected, and it is preferable that the particle size is small to some extent from such a viewpoint. The production method according to the present embodiment is excellent in composition controllability. Therefore, for example, even when a raw material having a particle size that can reduce homogeneity is used in a production method in the related art, a more homogeneous glass phase or sulfide solid electrolyte can be produced in the production method according to the present embodiment.

From the viewpoint, specifically, the particle size of each raw material is preferably 1 mm or less, more preferably 500 µm or less, still more preferably 250 µm or less, even more preferably 100 µm or less, and particularly preferably 50 µm or less. The smaller the particle size, the more preferred, a lower limit thereof is actually about 0.1 µm, and the particle size may be 1 µm or more or 5 µm or more.

As described above, by the production method according to the present embodiment, even when a raw material having a relatively large particle size is used, a homogeneous glass phase or sulfide solid electrolyte is easily obtained. In consideration of this, for example, from the viewpoint of reducing a production cost, the particle size of each raw material may be 10 µm or more, 100 µm or more, or 250 µm or more.

From them, the particle size of each raw material is preferably 0.1 µm to 1 mm, more preferably 1 µm to 500 µm, still more preferably 5 µm to 250 µm, even more preferably 5 µm to 100 µm, and particularly preferably 5 µm to 50 µm. From the viewpoint of the production cost, the particle size of each raw material is preferably 10 µm to 1 mm, more preferably 100 µm to 1 mm, and still more preferably 250 µm to 500 µm.

In the present description, the particle size of each raw material refers to an average particle diameter (D50) represented by a median diameter determined from a chart of a volume-based particle size distribution obtained by measuring a particle size distribution using a laser diffraction particle size distribution analyzer MT 3300 EXII manufactured by Microtrac Inc.

The raw materials can be mixed by, for example, mixing in a mortar, mixing using a medium such as a planetary ball mill, and medium-less mixing such as a pin mill, a powder stirrer, and air flow mixing. The raw materials may be made amorphous by mixing before heating.

### <Step 2>

Step S2 in the present embodiment is step 2 of heating the raw material mixture obtained in step 1 to obtain the melt.

A specific method for heating and melting the raw material mixture is not particularly limited except that heating is performed under the ambient pressure condition.

In the production method according to the present embodiment, by performing the heating for melting the raw material mixture under the ambient pressure condition, a composition deviation between a composition in the raw material mixture and the compositions of the sulfide glass phase to be obtained and the high-ion-conductive crystalline phase derived therefrom or the composition of the sulfide solid electrolyte is small. Further, by performing the heating in a gas atmosphere containing an S element, the composition deviation can be further reduced. In the production method according to the present embodiment, the heating and melting is performed in an environment in which an atmosphere is controlled under the ambient pressure condition, and it is not necessary to perform the heating and melting by a sealed tube. However, a use of the sealed tube is not excluded at all.

Here, a difference between the sealed tube and the environment in which the atmosphere is controlled under the ambient pressure condition means that a pressure in a container of the sealed tube is in a vacuum state, that is, less than (gauge pressure - 15 kPa), whereas a pressure in a container at the time of heating and melting is within a range of (gauge pressure ± 15 kPa) in the environment in which the atmosphere is controlled under the ambient pressure condition.

That is, in the production method according to the present embodiment, the heating and melting in step 2 are performed under the ambient pressure condition of (gauge pressure ± 15 kPa). A composition ratio represented by [P/Li] of the glass phase to be obtained or the high-ion-conductive crystalline phase with respect to a composition ratio represented by [P/Li] of the raw material mixture at this time is preferably, for example, 95% to 105%.

The pressure during the heating and melting may be under the ambient pressure condition of (gauge pressure ± 15 kPa), and is preferably (gauge pressure ± 10 kPa), more preferably (gauge pressure ± 5 kPa), and still more preferably (gauge pressure ± 2 kPa).

Further, the composition ratio represented by [P/Li] of the glass phase to be obtained or the high-ion-conductive crystalline phase with respect to the composition ratio represented by [P/Li] of the raw material mixture at this time is more preferably 95% to 105%, still more preferably 97% to 103%, even more preferably 99% to 101%, and the closer to 100%, the more preferable. Here, the above composition ratio is preferably 95% or more, more preferably 97% or more, and still more preferably 99% or more, and is preferably 105% or less, more preferably 103% or less, and still more preferably 101% or less.

Regarding the composition ratio represented by [P/Li] of the glass phase to be obtained or the high-ion-conductive crystalline phase with respect to the composition ratio represented by [P/Li] of the raw material mixture, Li is an element that is difficult to volatilize, and P is an element that is easy to volatilize. Therefore, comparison of the composition ratios represented by [P/Li] between the raw material mixture and the glass phase or the high-ion-conductive crystalline phase is appropriate as an index of the composition deviation between the composition in the raw material mixture and the composition of the sulfide glass phase to be obtained or the high-ion-conductive crystalline phase or the composition of the sulfide solid electrolyte.

Examples of a heat-resistant container in which the raw material mixture is placed include a heat-resistant container made of carbon, a heat-resistant container containing an oxide such as quartz, quartz glass, borosilicate glass, aluminosilicate glass, alumina, zirconia, and mullite, a heat-resistant container containing a nitride such as silicon nitride and boron nitride, and a heat-resistant container containing a carbide such as silicon carbide. These heat-resistant containers may have a bulk formed of the above material, or may be a container having a layer made of carbon, an oxide, a nitride, a carbide, or the like, such as a carbon-coated quartz tube.

A melting temperature when the raw material mixture is heated varies depending on the raw materials to be used and the composition of the raw material mixture, and is, for example, preferably 600°C to 950°C, more preferably 630°C to 850°C, and still more preferably 650°C to 750°C. Here, the melting temperature is preferably 600°C or higher, more preferably 630°C or higher, and still more preferably 650°C or higher, from the viewpoint of a reaction rate. From the viewpoint of preventing the composition deviation due to volatilization of the components, the melting temperature is preferably 950°C or lower, more preferably 850°C or lower, and still more preferably 750°C or lower.

A time for the heating and melting varies depending on a scale, but is preferably 10 minutes to 10 hours, more preferably 30 minutes to 9.5 hours, still more preferably 45 minutes to 9 hours, and particularly preferably 1 hour to 9 hours. Here, the time for the heating and melting is preferably 10 minutes or more, more preferably 30 minutes or more, still more preferably 45 minutes or more, and particularly preferably 1 hour or more, from the viewpoint of allowing the reaction to proceed smoothly. The time for the heating and melting is preferably 10 hours or shorter, more preferably 9.5 hours or shorter, and still more preferably 9 hours or shorter, from the viewpoint of productivity.

The atmosphere in the container during the heating and melting is not particularly limited. For example, the atmosphere may be a nitrogen atmosphere, an argon atmosphere, or a gas atmosphere containing the S element. Among them, the gas atmosphere containing the S element is preferred from the viewpoint of more suitably preventing the composition deviation.

When the atmosphere is the gas atmosphere containing the S element, examples of an S element source include a sulfur gas, a hydrogen sulfide gas, and a sulfur dioxide gas, and it is preferable to contain a sulfur gas from the viewpoint of reactivity with the raw materials.

As the gas containing the S element, an elemental sulfur powder may be added, and the elemental sulfur powder may be vaporized by heating during the heating and melting to introduce the gas containing the S element. The elemental sulfur powder may be added together with the raw materials when the raw materials are mixed to obtain the raw material mixture, or may be separately added after the raw material mixture is obtained. However, when the elemental sulfur powder is added together with the raw materials when the raw material mixture is obtained, a mass of the elemental sulfur powder is not included in a mass of the obtained raw material mixture.

As the gas containing the S element, the sulfur gas, the hydrogen sulfide gas, the sulfur dioxide gas, or the like may be introduced, and the gas containing the S element obtained by adding the elemental sulfur powder may be introduced together.

As the gas containing the S element, a gas serving as the S element source is preferably used as a mixed gas with, for example, an inert gas. A mixing ratio with the inert gas can be freely selected, and is not particularly limited as long as a cumulative introduction amount of the S element with respect to the mass of the raw material mixture can be a desired value.

Examples of the inert gas include a nitrogen gas, an argon gas, and a helium gas, which may be used alone or in combination of two or more kinds thereof.

A dew point during the heating and melting is preferably -20°C or lower, and a lower limit thereof is not particularly limited and is usually about -80°C. An oxygen concentration is preferably 1000 ppm by volume or less.

Complete dissolution of the melt of the raw material mixture in step 2 can be confirmed by the absence of a peak derived from a crystal in a high-temperature X-ray diffraction measurement. It can also be confirmed by heating at a predetermined temperature and tilting the melt to confirm the presence or absence of fluidity.

### <Step 3>

Step S3 in the present embodiment is step 3 of cooling and solidifying the melt obtained in step 2 to obtain a glass phase.

The cooling and solidifying is performed under an ambient pressure condition. Here, the ambient pressure condition means an atmosphere under a pressure of about (gauge pressure ± 15 kPa) as described above.

A pressure at the time of cooling and solidifying may be under the ambient pressure condition of (gauge pressure ± 15 kPa), and is preferably (gauge pressure ± 10 kPa), more preferably (gauge pressure ± 5 kPa), and still more preferably (gauge pressure ± 2 kPa).

A cooling rate in the cooling and solidifying is 100°C/sec or more, preferably 100°C/sec to 100,000°C/sec, more preferably 500°C/sec to 50,000°C/sec, and still more preferably 1,000°C/sec to 10,000°C/sec. Here, by performing ultrafast quenching at a cooling rate of 100°C/sec or more, which is higher than that in the related art, the proportion of the sulfide glass phase containing Li, P, and S as constituent elements can be, for example, 60 mass% or more.

Since the sulfide glass phase can achieve higher lithium ion conductivity than the sulfide glass in the related art, the lithium ion conductivity of the sulfide solid electrolyte can also be increased. Further, by performing the cooling and solidifying under the ambient pressure condition, the composition deviation between the composition in the raw material mixture and the compositions of the glass phase to be obtained and the high-ion-conductive crystalline phase derived therefrom or the composition of the sulfide solid electrolyte can also be reduced.

The cooling rate is 100°C/sec or more, and is preferably 500°C/sec or more, and more preferably 1,000°C/sec or more, from the viewpoint of ease of glass formation. An upper limit of the cooling rate is not particularly limited, and the cooling rate is preferably 100,000°C/sec or less, more preferably 50,000°C/sec or less, and still more preferably 10,000°C/sec or less, from the viewpoint of facility capacity.

The ultrafast quenching as described above can be implemented by using, for example, a rapid cooling twin roll.

The sulfide glass phase can achieve the higher lithium ion conductivity than the sulfide glass in the related art. Further, by performing the cooling and solidifying under the ambient pressure condition, the composition deviation between the composition in the raw material mixture and the compositions of the sulfide glass phase to be obtained and the high-ion-conductive crystalline phase derived therefrom or the composition of the sulfide solid electrolyte can also be reduced.

### <Step 4>

Step S4 according to the present embodiment is step 4 of heating the glass phase obtained in step 3 to obtain a high-ion-conductive crystalline phase obtained by crystallizing a part of the glass phase and another crystalline phase.

The heating in step 4, that is, a temperature at the time of crystallization for obtaining the high-ion-conductive crystalline phase and the another crystalline phase can be determined depending on a crystallization temperature at which the glass phase becomes the high-ion-conductive crystalline phase.

Specifically, from a viewpoint of effectively promoting the crystallization, the temperature is preferably (crystallization temperature - 15°C) or higher, may be (crystallization temperature - 10°C) or higher, may be a temperature equal to or higher than the crystallization temperature, or may be (crystallization temperature + 1°C) or higher. Further, it is found that when heating at a high temperature is performed, other heterogeneous phases, which are crystals having low ion conductivity, are precipitated after precipitation of the high-ion-conductive crystalline phase. Therefore, from the viewpoint of preventing the precipitation of the crystals having the low ion conductivity, the crystallization temperature is preferably equal to or lower than a temperature at which the crystals having the low ion conductivity are precipitated, more preferably (crystallization temperature + 20°C) or lower, and still more preferably (crystallization temperature + 15°C) or lower.

That is, the temperature at the time of crystallization is preferably (crystallization temperature - 15°C) or higher, and more preferably (crystallization temperature - 15°C) or higher and equal to or lower than the temperature at which the crystals having the low ion conductivity are precipitated. Further, the temperature may be (crystallization temperature - 10°C) or higher and (crystallization temperature + 20°C) or lower, may be crystallization temperature or higher and (crystallization temperature + 20°C) or lower, or may be (crystallization temperature + 1°C) or higher and (crystallization temperature + 15°C) or lower. Within the above range, the high-ion-conductive crystalline phase is obtained from the glass phase, and at the same time, other crystalline phases are obtained.

The crystallization temperature in the present description refers to a temperature at a peak top of an exothermic peak observed when differential scanning calorimetry (DSC) is performed on the sulfide glass phase, which can be said to be a precursor of the sulfide solid electrolyte obtained in step 3, and the temperature is increased at a heating rate of 5°C/min.

A heating time during the crystallization is, for example, 1 minute to 6 hours, preferably 1 minute to 3 hours, more preferably 5 minutes to 2 hours, and still more preferably 10 minutes to 100 minutes. Here, from a viewpoint of a stable quality, the heating time is preferably 1 minute or more, more preferably 5 minutes or more, and still more preferably 10 minutes or more. Further, from the viewpoint of productivity, the heating time is preferably 6 hours or less, more preferably 3 hours or less, still more preferably 2 hours or less, and even more preferably 100 minutes or less.

By adjusting the heating temperature and the heating time during the crystallization, the content ratio of the high-ion-conductive crystalline phase can be adjusted.

Examples of a heating atmosphere during the crystallization include a nitrogen atmosphere, an argon atmosphere, and a dry air atmosphere. Among these, a nitrogen atmosphere or an argon atmosphere is preferable from a viewpoint of not impairing the ion conductivity.

A dew point during the crystallization is preferably -30°C or lower.

An oxygen concentration during the crystallization may be in a dry air environment, but is preferably 5% by volume or less from a viewpoint of safety.

After the heating, the sulfide solid electrolyte according to the present embodiment is obtained by cooling to room temperature at 1°C/min to 10,000°C/min, for example.

The sulfide solid electrolyte obtained as described above may be used as it is in at least one or more selected from the group consisting of the positive electrode layer, the solid electrolyte layer, and the negative electrode layer, or may be used after pulverization, drying, or the like according to an application or the like.

### EXAMPLES

Hereinafter, the present invention is specifically described with reference to Examples, but the present invention is not limited thereto.

Example 1 to Example 4 are Inventive Examples, and Example 5 and Example 6 are Comparative Examples.

### <<Test Example>>

### <Example 1: Melt Quenching Method>

Under a dry nitrogen gas atmosphere, a lithium sulfide powder (manufactured by Sigma, purity 99.98%), a phosphorus pentasulfide powder (manufactured by Sigma, purity 99%), and a lithium bromide powder (manufactured by Sigma, purity 99.995%) were weighed so as to have a composition ratio of Li_{3.4}P_{1.0}S_{4.0}Br_{0.34} (Li: 38.9 at%, P: 11.4 at%, S: 45.8 at%, and Br: 3.9 at%), and mixed in a mortar to obtain a raw material mixture (step 1).

The obtained raw material mixture was put into a carbon container in an S element-containing nitrogen atmosphere having a dew point of -50°C or lower and containing a sulfur powder (manufactured by Sigma, purity 99.998%) as an S element source, the container was put into an electric furnace inside a glove box, and the container was heated at a pressure of gauge pressure + 1 kPa and a temperature of 750°C for 1 hour to obtain a completely dissolved melt (step 2).

Next, a tip of the container was heated and melt the melt, and a molten liquid which is the melt was poured onto twin rolls and cooled to room temperature at a cooling rate of 3,000°C/sec to obtain a glass phase (step 3). A pressure at this time was (gauge pressure + 1 kPa), and the cooling rate was adjusted by an outflow rate of the molten liquid, a roll gap of the twin rolls, and a rotation speed.

The glass phase obtained as described above was heated in a nitrogen atmosphere at 210°C for 10 minutes to crystallize a part of the glass phase (step 4), and then cooled to room temperature at a cooling rate of 300°C/min to obtain a sulfide solid electrolyte containing a glass phase, a high-ion-conductive crystalline phase, and another crystalline phase.

The glass phase obtained as described above was subjected to a DSC measurement at a heating rate of 5°C/min, and it was confirmed that a temperature at a peak top of the exothermic peak, that is, the crystallization temperature was 223°C.

### <Examples 2 and 3: Melt Quenching Method>

A sulfide solid electrolyte containing a glass phase, a high-ion-conductive crystalline phase, and another crystalline phase was obtained in the same manner as in Example 1 except that the cooling rate in step 3 was 8,000°C/sec (Example 2) or 10,000°C/sec (Example 3). It was confirmed that the crystallization temperature of the glass phase obtained in step 3 was 217°C (Example 2) or 215°C (Example 3).

### <Example 4: Melt Quenching Method>

A sulfide solid electrolyte containing a glass phase, a high-ion-conductive crystalline phase, and another crystalline phase was obtained in the same manner as in Example 1 except that a lithium sulfide powder (manufactured by Sigma, purity 99.98%), a phosphorus pentasulfide powder (manufactured by Sigma, purity 99%), a lithium bromide powder (manufactured by Sigma, purity 99.995%), and a lithium chloride powder (manufactured by Sigma, purity 99.995%) were weighed so as to have a composition ratio of Li_{3.4} P_{1.0}S_{4.0}Cl_{0.1}Br_{0.2} (Li: 39.1 at%, P: 11.5 at%, S: 46.0 at%, Cl: 1.1 at%, and Br: 2.3 at%) to obtain a raw material mixture.

It was confirmed that the crystallization temperature of the glass phase obtained in step 3 was 219°C.

### <Example 5: Mechanical Milling Method>

Step 1 was performed in the same manner as in Example 1 to obtain a raw material mixture.

Next, the obtained raw material mixture was further mixed using a planetary ball mill (manufactured by Fritsch, P-7) to obtain a glass phase (steps 2' + 3'). The mixing by the planetary ball mill was performed by mechanical milling at 400 rpm for 20 hours in a nitrogen atmosphere using zirconia balls having a particle diameter of 4 mm and a zirconia pot. A dew point during operation was maintained at -70°C or lower.

The glass phase obtained as described above was heated in a nitrogen atmosphere at 210°C for 10 minutes to crystallize a part of the glass phase (step 4), and then cooled to room temperature at a cooling rate of 300°C/min to obtain a sulfide solid electrolyte containing a glass phase and a high-ion-conductive crystalline phase.

A crystallization temperature of the glass phase was 207°C.

### <Example 6: Mechanical Milling Method>

Step 1 was performed in the same manner as in Example 4 to obtain a raw material mixture.

Next, steps 2' + 3' and step 4 were performed in the same manner as in Example 5 to obtain a sulfide solid electrolyte containing a glass phase and a high-ion-conductive crystalline phase.

A crystallization temperature of the glass phase was 210°C.

### <<Evaluation: Glass Phase>>

In each of Examples, the glass phase obtained in step 3 or steps 2' + 3' was weighed in a glove box and dissolved in an alkaline aqueous solution, and a composition analysis was performed for each element.

Specifically, P and S were subjected to ICP emission spectrometry (apparatus: model number PS3520UV DDII, manufactured by Hitachi High-Tech Science Corporation).

Li was analyzed by atomic absorption spectroscopy (apparatus: model number ZA3300, manufactured by Hitachi High-Tech Corporation, CsCl was added at a solution concentration of 0.1% in a Li measurement).

Br and Cl were analyzed by ion chromatography (apparatus: model number ICS-2100 (column: AS11HC) manufactured by Thermo Fisher Scientific Inc, and a small amount of H₂O₂ was added and diluted with ultrapure water for a measurement).

From the above, a composition of the glass phase was confirmed.

### <<Evaluation: Sulfide Solid Electrolyte>>

### <Composition Ratio and Content Ratio>

Each of the sulfide solid electrolytes obtained in Examples 1 to 6 was pulverized in a mortar and passed through a 100 µm sieve to obtain a powder of a solid electrolyte precursor having an average particle diameter D50 of about 20 µm, which was used as a sample.

Further, using an X-ray diffraction (XRD) device (manufactured by Rigaku Corporation, Smart Lab), measurements were performed under the following conditions: radiation source: CuKα radiation (λ = 1.5418 Å), tube voltage: 45 kV, tube current: 200 mA, scan angle: 10° to 100°, scan speed: 5°/min, step number: 0.01°/step, under an air-free environment. In addition, a silicon powder was added as an internal standard when XRD is measured, and crystallinity (wt%) was obtained by Rietveld analysis.

In the obtained XRD pattern, a value of 2θ at which a diffraction peak was observed was determined.

Further, a peak intensity of a diffraction peak at 2θ = 20.2° ± 0.5° was obtained as I_{A}, and a peak intensity of a diffraction peak located on the lowest angle side among the diffraction peaks shown in a range of 2θ = 18.0° to 22.5° and different from the diffraction peaks indicating the high-ion-conductive crystalline phase was obtained as I_{α}, and a peak intensity ratio represented by I_{A}/I_{α} was also obtained using these.

Here, a composition ratio of the phase including the sulfide glass can be determined to be the same as a composition ratio of the high-ion-conductive crystalline phase, but just to be sure, the composition ratio was compared with the composition ratio obtained in the evaluation with respect to the glass phase. As a result, it was confirmed that the composition ratio of the glass phase before undergoing step 3 with respect to the composition ratio of the high-ion-conductive crystalline phase was within a range of ± 20% for all components.

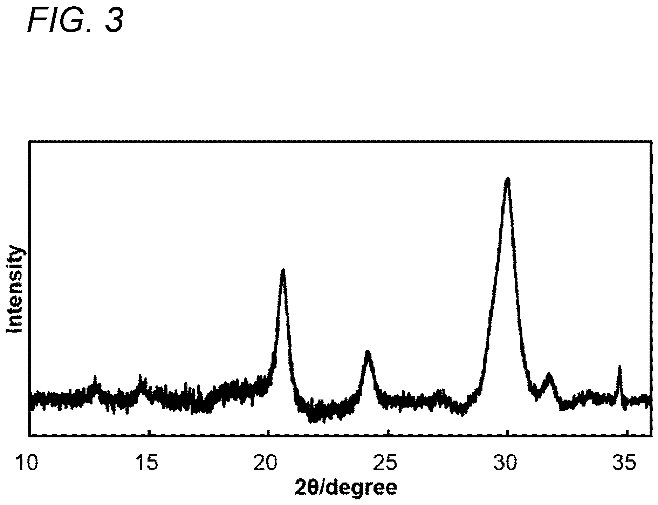

XRD patterns of the sulfide solid electrolytes obtained in Examples 2 and 5 are shown in FIG. 2 and FIG.3, respectively.

### <Water Resistance>

The obtained sulfide solid electrolyte was pulverized in a mortar and then passed through a 100 µm sieve to obtain a powder having an average particle diameter (D50) of about 20 µm, which was used as a sample.

The sample (10 mg) was exposed to a humidified N₂ gas having a dew point of -20°C for 5 hours, and a concentration of hydrogen sulfide in the gas was monitored to determine a total amount of the generated hydrogen sulfide. The humidified N₂ gas was circulated at 0.5 L/min.

Thus, by detecting the total amount of the generated hydrogen sulfide, water resistance was evaluated, and hydrolysis resistance was evaluated. As a detection tube, a hydrogen sulfide concentration meter (Model 3000RS, manufactured by TEKHNE Corporation) was used.

Results are shown in "water resistance H₂S generation amount (mL/g)" in Table 1.

### <Lithium Ion Conductivity>

The obtained sulfide solid electrolyte in each of Examples was pulverized in a mortar and then passed through a 100 µm sieve to obtain a powder having an average particle diameter (D50) of about 20 µm, which was used as a sample.

The sample was compressed under a pressure of 380 MPa to prepare a green compact as a measurement sample, and measured by using an electrochemical impedance spectroscopy device (potentiostat/galvanostat VSP, manufactured by Bio-Logic Sciences Instruments). The measurement conditions were a measurement frequency of 100 Hz to 1 MHz, a measurement voltage of 100 mV, and a measurement temperature of 25°C, and the lithium ion conductivity was determined from the obtained Nyquist plot. Results were shown in Table 1 under "σ^{Li+} (mS/cm)".

**Table 1**

| | Method for producing glass phase | | |
|---|---|---|---|
| | Method | Heat and cool | Cooling rate (°C/sec) |
| Example 1 | Melt quenching method | Under ambient pressure condition | 3,000 |
| Example 2 | Melt quenching method | Under ambient pressure condition | 8,000 |
| Example 3 | Melt quenching method | Under ambient pressure condition | 10,000 |
| Example 4 | Melt quenching method | Under ambient pressure condition | 8,000 |
| Example 5 | Mechanical milling method | - | - |
| Example 6 | Mechanical milling method | - | - |

**Table 1 (continued)**

| | Sulfide solid electrolyte | | | | Evaluation | |
|---|---|---|---|---|---|---|
| | Composition | Diffraction peak of high-ion-conductive crystalline phase 2θ (°) | Diffraction peak of another crystalline phase 2θ (°) | Peak intensity ratio I_{A}/I_{α} | Water resistance H₂S generation amount (mL/g) | σ^{Li+} (mS/cm) |
| Example 1 | Li_{3.4}P_{1.0}S_{4.0}Br_{0.34} | 12.4, 14.4, 20.2, 23.8, 29.7, 31.4 | 18.2, 19.2, 21.8 | 0.40 | 0.00 | 3.3 |
| Example 2 | Li_{3.4}P_{1.0}S_{4.0}Br_{0.34} | 12.4, 14.4, 20.2, 23.8, 29.7, 31.4 | 18.2, 19.2, 21.8 | 0.35 | 0.04 | 3.2 |
| Example 3 | Li_{3.4}P_{1.0}S_{4.0}Br_{0.34} | 12.4, 14.4, 20.2, 23.8, 29.7, 31.4 | 18.2, 19.2, 21.8 | 0.25 | 0.09 | 3.0 |
| Example 4 | Li_{3.4}P_{1.0}S_{4.0}Cl_{0.1}Br_{0.2} | 12.4, 14.4, 20.2, 23.8, 29.7, 31.4 | 18.2, 19.2, 21.8 | 0.30 | 0.07 | 2.8 |
| Example 5 | Li_{3.4}P_{1.0}S_{4.0}Br_{0.34} | 12.4, 14.4, 20.2, 23.8, 29.7, 31.4 | - | - | 1.5 | 2.1 |
| Example 6 | Li_{3.4}P_{1.0}S_{4.0}Cl_{0.1}Br_{0.2} | 12.4, 14.4, 20.2, 23.8, 29.7, 31.4 | - | - | 2.1 | 1.7 |

From the above results, it is found that the sulfide solid electrolytes in Examples 1 to 3 have the same compositions of the sulfide glass phase and the high-ion-conductive crystalline phase as the sulfide solid electrolyte in Example 5, but can achieve high water resistance. Similarly, the sulfide solid electrolyte in Example 4 can achieve higher water resistance than the sulfide solid electrolyte in Example 6. This is considered to be because, in producing the sulfide solid electrolytes in Examples 1 to 4, the melt quenching method employing specific conditions is employed to obtain the glass phase, and then the glass phase is crystallized by heating, whereby another crystalline phase exhibiting two or more diffraction peaks in the range of 2θ = 18.0° to 22.5°, which are different from the diffraction peaks indicating the high-ion-conductive crystalline phase, is precipitated, thereby reducing the reaction with moisture.

In addition, from the results of the water resistance of the sulfide solid electrolytes in Examples 1 to 3, the higher the peak intensity ratio I_{α}/I_{A}, that is, the higher the content ratio of the another crystalline phase, the more remarkable the effect of water resistance.

Although the present invention has been described in detail with reference to specific embodiments, it is apparent to those skilled in the art that various changes and modifications can be made without departing from the spirit and scope of the present invention. The present application is based on a Japanese Patent Application (Japanese Patent Application No. 2023-168391) filed on September 28, 2023, the content of which is incorporated herein by reference.

## Claims

1. A sulfide solid electrolyte comprising:
a crystalline phase and a glass phase, wherein
the glass phase comprises a phase comprising a sulfide glass which comprises Li, P, and S as constituent elements,
the crystalline phase comprises a high-ion-conductive crystalline phase derived from the sulfide glass and another crystalline phase,
compositions of the phase comprising the sulfide glass and the high-ion-conductive crystalline phase satisfy Li: 30 at% to 50 at%, P: 5 at% to 15 at%, and S: 30 at% to 60 at%, and
the another crystalline phase exhibits, in an XRD pattern obtained by a powder X-ray diffraction measurement, two or more diffraction peaks different from a diffraction peak indicating the high-ion-conductive crystalline phase within a range of 2θ = 18.0° to 22.5°.

2. The sulfide solid electrolyte according to claim 1, wherein
the high-ion-conductive crystalline phase has diffraction peaks at least at 2θ = 20.2° ± 0.5°, 23.8° ± 0.5°, and 29.7° ± 0.5° in the XRD pattern obtained by a powder X-ray diffraction measurement.

3. The sulfide solid electrolyte according to claim 2, wherein
a peak intensity ratio represented by I_{α}/I_{A} is more than 0.01 and less than 0.6,
where I_{A} is a peak intensity of the diffraction peak at 2θ = 20.2° ± 0.5° of the high-ion-conductive crystalline phase, and I_{α} is a peak intensity of a diffraction peak located on a lowest angle side among the two or more diffraction peaks exhibited in the range of 2θ = 18.0° to 22.5° of the another crystalline phase.

4. The sulfide solid electrolyte according to claim 1 or 2, wherein
the high-ion-conductive crystalline phase further has a diffraction peak at at least one selected from the group consisting of 20 = 12.4° ± 0.5°, 14.4° ± 0.5°, and 31.4° ± 0.5° in the XRD pattern obtained by the powder X-ray diffraction measurement.

5. The sulfide solid electrolyte according to claim 1 or 2, wherein
the phase comprising the sulfide glass and the high-ion-conductive crystalline phase further comprise Ha as a constituent element,
Ha is at least one selected from the group consisting of F, Cl, Br, and I, and
compositions of the phase comprising the sulfide glass and the high-ion-conductive crystalline phase further satisfy Ha: 1 at% to 12 at%.
